(19) Europäisches Patentamt / European Patent Office / Office européen des brevets

(11) **EP 3 375 543 B1**

(12) **EUROPEAN PATENT SPECIFICATION**

(45) Date of publication and mention of the grant of the patent:
**07.08.2019 Bulletin 2019/32**

(51) Int Cl.:
**B22C 9/04** *(2006.01)*          **B22C 7/02** *(2006.01)*
**B29C 45/64** *(2006.01)*        **B29C 45/76** *(2006.01)*
**B29C 67/24** *(2006.01)*        **B29K 91/00** *(2006.01)*

(21) Application number: **15891027.3**

(22) Date of filing: **11.11.2015**

(86) International application number:
**PCT/JP2015/081710**

(87) International publication number:
**WO 2017/081763 (18.05.2017 Gazette 2017/20)**

(54) **WAX INJECTION MOLDING DEVICE AND CASTING METHOD FOR ARTICLE USING WAX INJECTION MOLDING DEVICE**

WACHSFORMSPRITZGIESSVORRICHTUNG UND VERFAHREN ZUM GIESSEN VON ARTIKELN DAMIT

DISPOSITIF DE MOULAGE PAR INJECTION DE CIRE ET PROCÉDÉ DE MOULAGE D'ARTICLE UTILISANT LE DISPOSITIF DE MOULAGE PAR INJECTION DE CIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**19.09.2018 Bulletin 2018/38**

(73) Proprietor: **Eishin Technology Co., Ltd**
**Ayase-shi, Kanagawa 252-1107 (JP)**

(72) Inventor: **KUBO, Chikanari**
**Yamato-shi**
**Kanagawa 242-0002 (JP)**

(74) Representative: **Treeby, Philip David William et al**
**Maucher Jenkins**
**26 Caxton Street**
**London SW1H 0RJ (GB)**

(56) References cited:
**WO-A1-2014/076738     CN-U- 203 875 279**
**US-A- 6 065 954**

## Description

### Technical Field

The present application relates to a wax mold injection molding apparatus used for lost wax casting and a method of casting articles using the wax mold injection molding apparatus.

### Background Art

Ornaments, accessories, jewelry and the likes mainly using a noble metal are small and have complicated and precise shapes. There has been a demand to produce such products in large quantities, and a lost wax precision casting method has been developed in this industry. Of course, this method is also applicable in manufacturing precision industrial components other than the above.

Lost wax precision casting in the jewelry manufacturing industry has the following steps.

A first step is a process of producing a model.
A second step is a process of producing a rubber mold having a cavity of the same shape as the model.
A third step is a process of producing a wax mold of the same shape as the model, by injecting a molten wax into a rubber mold, and taking it out. In general, by repeatedly performing the third step, a large number of wax molds are produced.
A fourth step is a process of attaching a large number of wax molds produced in the third step in a tree-like manner around a wax stick while melting a runner end portion of the wax molds, placing it in a cylindrical heat-resistant vessel, pouring plaster into the vessel, and producing a plaster mold.
A fifth step is a baking process using an electric furnace or a gas furnace or others, which conprises melting the wax in the plaster mold at a low temperature to flow it out, burning completely the wax adhered to the inside of the cavity at a moderate temperature, strengthening the plaster mold to withstand an impact at the time of pouring a noble metal in it by further increasing the temperature, and then, waiting with lowering the temperature thereof to a level suitable for pouring the noble metal.
A sixth step is a casting process of pouring a noble metal into the plaster mold having a number of cavities of the same shape as the model.
A seventh step is a finishing process consisting of breaking the plaster to pieces by rapidly cooling the plaster mold after the noble metal has been solidified, taking out the noble metals in the tree-like form, cutting away unnecessary portions, and polishing the noble metal of the same shape as the model.

The present invention relates to a wax mold injection molding apparatus used in the third step of the wax mold manufacturing process. Hereinafter, a detailed description will be given as to a rubber mold structure and functions required in a wax mold injection molding apparatus.

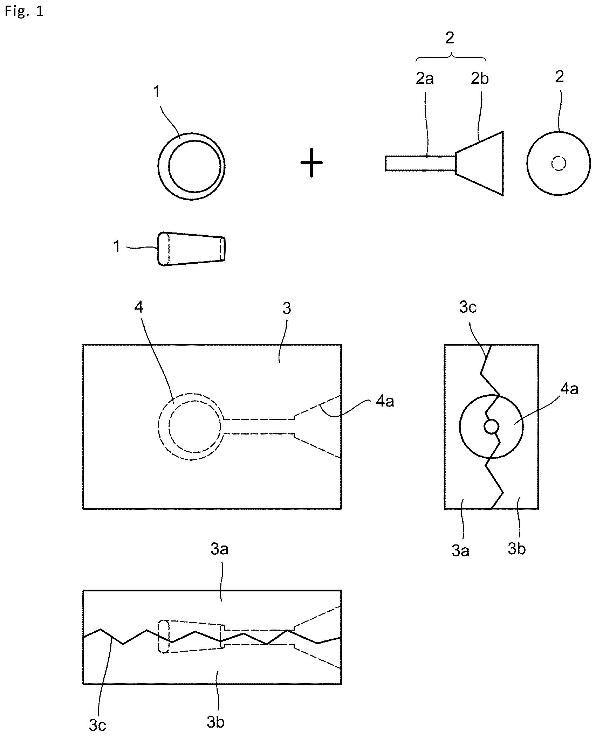

A method of manufacturing a rubber mold in the second step will be described with reference to FIG. 1. In the second step, a molding flask (not shown) of a size corresponding to a size of a rubber mold 3 to be manufactured, a model 1 and a part 2 (a sprue runner 2a and a pouring opening 2b) are used. Close the bottom of the molding flask by a plate, pour a pre-vulcanization silicon rubber material in the lower half of the flask, place the model 1 to which the part 2 is attached on the material on it, then pour a pre-vulcanization material in the upper half of the flask, close the upper part of the flask by a plate, and vulcanize by increasing the temperature while pressing. A silicon rubber of two-liquid solidification type may be used instead of the vulcanizable rubber.

When the silicone rubber has been hardened to have the rubber inherent elasticity, remove the rubber mold 3 from the flask, make a zig-zag cut 3c in the rubber mold, take out the model 1 and the part 2 bonded thereto, and separate the rubber mold into an upper rubber mold 3a and a lower rubber mold 3b. Thus, a rubber mold 3 having a cavity 4 of the same shape as the model 1 and the part 2 in it is obtained. By making such a cut 3c on the entire separation surface, the upper and lower rubber molds 3a and 3b can be put together exactly in line with each other, and the inside cavity shape can be accurately reproduced.

Such a cut 3c also has an effect to facilitate vacuuming and sealing of pressurized wax, when injecting a wax into the rubber mold 3 to create a wax mold. When taking out the wax mold from the rubber mold 3, by taking out the wax mold while deforming the lower rubber mold 3b after separating the upper rubber mold 3a from the mating surfaces (cut) 3c, even a wax mold having a complicated shape can be taken out easily without breaking it. In some cases, the interior of the rubber mold may be divided into several parts, or a core(s) may be inserted.

Since models have a variety of sizes, the sizes and thicknesses of rubber molds also change accordingly. In addition, the rubber hardness is also often changed in accordance with the rubber mold durability and the degree of difficulty of removing wax molds from the interior of the rubber molds.

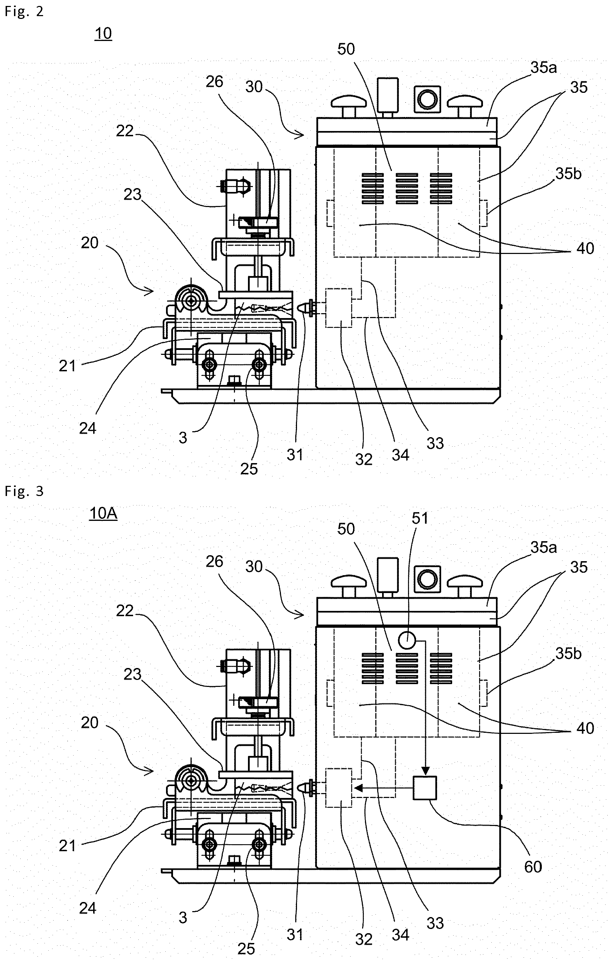

FIG. 2 shows a conceptual view of a wax mold injection molding apparatus 10 used in the third step. The wax mold injection molding apparatus 10 comprises a clamp unit 20, and a wax injection unit 30. The clamp unit 20 is used to properly clamp a rubber mold 3, adjusts the height of a pouring gate 4a of the rubber mold to an axis of an injection nozzle 31, and press the rubber mold to the injection nozzle 31.

The clamp unit 20 mainly comprises a rubber mold mounting table 21 to mount the rubber mold 3, a clamp force generator 22 for clamping the rubber mold 3, a clamp plate 23 connected thereto and a pressing mechanism 24 for pressing the rubber mold 3 to the injection nozzle 31.

The wax injection unit 30 has two chambers, a wax chamber 40 and a vacuum chamber 50, in one tank 35, and is used to evacuate a cavity in the rubber mold 3 from the injection nozzle 31 and then to inject a molten wax into the cavity.

Generally, the wax chamber 40 and the vacuum chamber 50 are concentrically arranged, so that pressurized air is supplied to the wax chamber 40 from an upper tank cover 35a and a vacuum source is connected to the vacuum chamber 50 to maintain a vacuum. A band heater 35b for warming a whole body of the tank 35 for constantly keeping the wax in a molten state is disposed around the tank 35.

The injection nozzle 31 can be connected selectively to the wax chamber 40 and the vacuum chamber 50 via a switching mechanism 32. The switching mechanism 32 includes a wax valve for opening and closing a wax passage 33 between the injection nozzle 31 and the wax chamber 40, and an exhaust valve for opening and closing an exhaust passage 34 between the injection nozzle 31 and the vacuum chamber 50. By switching the switching mechanism 32, the injection nozzle 31 can take the following three states.

- a state where the injection nozzle 31 is disconnected from both the wax chamber 40 and vacuum chamber 50 (State 1)
- a state where the injection nozzle 31 is connected to the vacuum chamber 50 (State 2), or
- a state where the injection nozzle 31 is connected to the wax chamber 40 (State 3)

In the wax mold injection molding apparatus 10 configured as above, while making the injection nozzle 31 to the state 1, the rubber mold 3 is set to the clamp unit 20 and the rubber mold mounting table 21 is advanced to press the rubber mold 3 to the injection nozzle 31, then the cavity 4 of the rubber mold 3 is evacuated by switching the injection nozzle 31 from the state 1 to state 2, and then the cavity 4 of the rubber mold 3 is filled with a wax by switching the injection nozzle 31 from the state 2 to state 3.

After returning to the state 1, the rubber mold mounting table 21 is retracted, the clamp plate 23 is raised, the rubber mold 3 is taken out and is separated at the matching surface 3c, and then the wax mold of the same shape as the cavity 4 is taken out. Such molds are manufactured in large quantity, and then the process proceeds to the next forth step.

When the injection of wax into the same rubber mold 3 is repeated, the mold is gradually warmed and the injected wax takes time to be solidified. So, the productivity decreases. Therefore, in actual production sites, in order to increase the productivity, a plurality of rubber molds 3 having substantially the same shape are prepared, a wax mold is produced with using each rubber mold 3 sequentially (in an orderly manner), return to the first rubber mold 3 after one round, and repeat the sequential wax mold production . Such a method of manufacturing a wax mold using a plurality of same shape rubber molds 3 in a repeated manner may be hereinafter referred to as a "sequential wax mold manufacturing method".

When injection molding a wax mold using the wax mold injection molding apparatus 10 shown in FIG. 2, it is necessary to set or determine a number of parameters as described below.

A. Height adjustment (Method of aligning the pouring gate 4a of the rubber mold 3 with an injection axis of the injection nozzle 31)

This is an adjustment to align the pouring gate 4a with an injection axis of the injection nozzle 31 by adjusting the height of the rubber mold mounting table 21 with using a height adjustment bolt 25 and an elongate hole. There is a method that an operator manually adjusts the height by visual inspection. There is also a method, in which a moving distance of the rubber mold mounting table 21, which is necessary to automatically adjust the height of the pouring gate 4a to the injection nozzle 31, is previously measured and stored in the apparatus, and the height is automatically adjusted using a drive mechanism and computer control.

In the clamping apparatus of PCT/JP2015/070617 previously filed by the present applicant, the height of the pouring gate 4a can be automatically adjusted to the injection nozzle 31 by the provision of a height adjustment mechanism, which automatically moves the rubber mold mounting table 21 by a predetermined distance (a distance of 1/2 of the moving distance of the clamp plate 23 from the initial position to the position where the rubber mold 3 is clamped).

B. Adjustment of a position of a clamp force

A position of a clamp force on the rubber mold 3 is adjusted by loosening a lock knob 26 for moving a clamp force point, moving the clamp force generator 22 in the injecting direction of the injection nozzle 31 with using a not-shown elongate hole as a guide, and fixing the knob 26. There is a method of changing the position of the force point by manually operating a feed screw or a rack and pinion in lieu of the elongate hole. If the length of the rubber mold 3 in the injecting direction can be detected by a sensor, it is conceivable to automatically change the force point position by combining an electric motor with the feed screw or the rack and pinion.

C. Clamp force

After evacuating the cavity 4 of the rubber mold 3 by sucking air therein, a molten wax is injected into the cavity 4. At this time, it is very important that the vacuum is kept and that the wax does not bleed out onto the rubber mold matching surface 3c. Usually, a molten wax injection pressure is first determined, and then several wax molds are made with keeping that pressure and changing the other conditions. Then, a clamp force is determined such that a sealing force that the vacuum is not broken and the wax does not bleed out onto the matching surface 3c can be achieved, and the cavity 4 is not largely deformed by an unnecessarily great clamp force, and this value (clamp force) is stored in the apparatus. By controlling the air pressure applied to the clamp force generator, any clamp force can be obtained at will.

An appropriate value of the clamp force varies by the area of the cavity 4 to which an injection pressure acts directly, the material of the rubber, the area of the clamping surface of the rubber mold 3, an injection pressure and the likes. Among all, the effects of the area of the clamping surface and the injection pressure are dominant. By using the technology disclosed in the PCT/JP2015/073015 and/or PCT/JP2015/078074 previously filed by the present applicant, it is possible to automatically generate an appropriate clamp force at the time of clamping, and maintain an appropriate sealing force in a state where the injection pressure is applied, without previously storing the clamp force in the apparatus.

D. Rubber mold 3 pressing force

In the apparatus of FIG. 2, an appropriate force of pressing the rubber mold 3 (a force for pressing the rubber mold 3 to the injection nozzle 31) is controlled by an air pressure applied to the pressing mechanism 24.

After determining the injection pressure, preliminary wax injection experiments are performed with changing the pressing force, and a pressing force by which a molten wax does not leak out from the matching surface between the pouring gate 4a and the injection nozzle 31 is determined. Then, the value (pressing force) is stored in the apparatus. An excessive pressing force at the time the pouring gate 4a is pressed to a tapered portion of the injection nozzle 31 causes the pouring gate to open and the molten wax to leak. The clamp force acts so as not to open the pouring gate. Therefore, it is necessary to determine the clamp force first, and then determine the pressing force by which the molten wax does not leak out. However, as the shapes of the pouring gate 4a and the tip of the injection nozzle 31 are constant, it has been known from various experiments that if the injection pressure is determined, it is possible to automatically determine an appropriate pressing force corresponding thereto.

E. Wax melting temperature/contraction/viscosity

A wax contracts and decreases in volume in the phase transition from a molten state to a solidified state. The higher a temperature difference is, the higher a contraction rate is. If the contraction rate is high, a wax mold faithfully reproducing the volume of the cavity 4 of the rubber mold 3 can not be made. Therefore, generally, it is desirable to melt a wax at a temperature close to a melting temperature (solidifying temperature), inject the wax with keeping it at the same state at a constant temperature as far as possible, and solidify immediately after the injection. A wax, unlike water, gradually softens as the temperature increases, and through a sherbet state, melts completely. Thus, the viscosity varies extremely depending on the melting temperature. This causes a change in the fluid resistance in the injection pass at the time of injection, and greatly affects the injection speed as a result.

Aflake-like wax is put in the wax chamber 40, and is heated and molten by the heating of the wax chamber by the band heater 35b. Alternatively, a lump of wax may be molten in another vessel beforehand, and then is put into the wax chamber 40. In either way, flakes or lumps are molten together with air among them, and air bubbles are mixed in at the time of melting. Therefore, the wax chamber temperature is controlled to a temperature slightly higher than the wax melting temperature, so that the air bubbles surface and naturally go out. Also, the temperatures of the wax passage 33, the exhaust passage 34, the injection nozzle 31 and the switching mechanism 32 are controlled to temperatures lower than the temperature of the wax chamber 40 by a heater(s). This is for reducing the contraction during solidification. Characteristics of a wax vary depending on the kind thereof.

F. Injection pressure

When the injection pressure is high, the injection speed is fast, and the speed of filling the cavity 4 of the rubber mold 3 increases. The surface temperature of the cavity 4 of the rubber mold 3 is fairly lower than the wax melting temperature. Thus, when the injection speed is slow, a wax goes deeper into the mold while increasing the viscosity. Therefore, if an elongate protruding part is designed in a deep portion of the cavity 4 of the rubber mold 3, a wax may not sharply reach to the end. When the injection pressure is high, a wax tends to reach every corner of the cavity 4 of the rubber mold 3, but the clamp force must be increased to ensure the sealing of the matching surface. When the clamp force is increased, a distortion of the cavity 4 of the rubber mold 3 increases. Usually, injection pressure is determined first based on the characteristics and melting temperature of the wax.

Injection speed depends on an injection pressure, a wax passage pipeline resistance, and a wax viscosity. Accordingly, if the same injection speed can be obtained by lowering the wax passage pipeline resistance with keeping the injection pressure low, the clamp force can be made lower, and the distortion of the cavity 4 of the rubber mold 3 can be made smaller. Therefore, the structures of the injection nozzle 31 and the switching mechanism 32 are important. By using the injection nozzle of PCT/JP2015/079741 filed by the present applicant earlier, it is possible to increase the injection speed by greatly shortening the wax passage. This enables to use a wax at a lower injection pressure and a lower temperature.

G. Vacuuming time

Though it also depends on the structures of the injection nozzle 31 and the switching mechanism 32, a longer vacuuming time is set as the volume of the cavity 4 of the rubber mold 3 becomes larger. For example, in case of a small thing as a ring, the volume of the cavity 4 is about 0.5-1.5 cc. The degree of vacuum in the vacuum chamber 50 will not substantially change by the evacuation of such a small cavity. Checking with a vacuum gauge whose full scale is 1 kPa, it is a level almost unnoticeable whether the pointer has moved or not. Thus, a fairly long vacuuming time is empirically used assuming such time would be necessary for the recovery of vacuum, while suspecting that the vacuuming is most probably completed in a short period on the other hand. As the volume V1 of the cavity 4 increases, the vacuuming time is empirically set to a longer time, for example, 2-7 seconds, by which the vacuum gage pointer returns to almost the initial position and a value (for vacuuming time) considered be optimum is adopted by further observing the actually injected wax mold. In short, it is usual that a longer vacuuming time is adopted in many cases. This applies also for "H. injection time" and "J. clamp holding time" described later.

H. Injection time

Though it also depends on the structures of the injection nozzle 31 and the switching mechanism 32, usually a longer injection time is set, as the volume of the cavity 4 of the rubber mold 3 becomes larger.

I. Pressing time of Rubber mold 3

The rubber mold 3 is pressed to the injection nozzle 31, and a wax is injected after vacuuming. If the rubber mold 3 is disengaged from the injection nozzle 31 immediately after the injection, the molten wax in the cavity 4 will come out from the pouring gate as the hollow portion corresponding to the sprue runner and the pouring gate 2 is not solidified. Thus, the rubber mold 3 must be pressed to the injection nozzle 31 for a time necessary for the wax in the sprue runner to solidify. Since the sizes of the pouring gate and sprue runner are almost constant, if the temperature of the rubber mold 3 is constant, the pressing time can be made constant. Further, the degree of contraction of the wax is heightened, as the wax on the inside surface of the cavity solidifies. Therefore, it is important to continue applying the injection pressure until the sprue runner is solidified. Therefore, the pressing time plus the injection time is handled as "injection time" in many apparatuses.

J. Clamp holding time

After a certain pressing time has passed following injecting a wax, the rubber mold mounting table 21 is retracted to disengage the rubber mold 3 from the injection nozzle 31 while keeping clamping of the rubber mold 3. Here, if the clamping is released immediately after the retraction, the molten wax leaks out from the matching surface of the rubber mold 3, as the wax slowly solidifies, especially when the cavity 4 is thick and large in volume. Therefore, it is sometimes necessary to keep the rubber mold 3 clamped for a certain amount of time after the injection. When the cavity 4 is thin and small in volume, the holding time may be short as the wax solidifies fast. Further, as described in "I. Rubber mold 3 pressing time", the wax surface in the cavity 4 often solidifies during the time the sprue runner solidifies.

In the sequential wax mold manufacturing method, when the clamp holding time is required to be made long, the following process can be taken. Empirically determine and wait a time in which the skin portion (like a skin of a bun) of the wax mold solidifies while the interior portion is still soft, release the clamping, take out the rubber mold 3 from the clamp unit 20, fasten the outer periphery of the rubber mold 3 by a rubber band or the like, and after a while for cooling, take out the wax mold by separating the rubber mold 3 from the matching surface 3c. To increase the productivity, prepare several rubber molds 3, sequentially perform injection molding, and separate the rubber mold 3 sequentially when it is sufficiently cooled down.

**Citation List**

**Patent Literature**

Patent Literature 1: International Publication WO2013/038448
Patent Literature 2: Japanese Unexamined Patent Application Publication No. 2002-254137

WO 2014/076738 A1 and CN 203 875 279 U are hereby acknowledged.

**Summary of the Invention**

**Problems to be Solved by the Invention**

Problem 1

When operating the wax mold injection molding apparatus 10, it is necessary to determine and/or set a number of parameters as described above. If the decision/setting of these parameters is automated, it becomes possible to improve the operational efficiency of the wax mold injection molding apparatus 10, or to fully automatically operate the wax mold injection molding apparatus 10, or improve the quality of a wax mold produced by the wax mold injection molding apparatus 10. From this viewpoint, the above parameters A to J will be examined.
As described above, "A. Height adjustment" can be automatically set by PCT/JP2015/070617.
Setting of "B. Position of a clamp force" can also be automated. However, in the sequential wax mold manufacturing method, as long as the rubber molds 3 of the same shape are used, it is unnecessary to change the position of the clamp force, and the necessity for automation is not so high.
Even if rubber molds are of the same shape, they are different in the volume of the cavity 4, the sealing area of the matching surface 3c, and the hardness and kind of rubber. Therefore, "C. Clamp force" is a very important setting parameter. In addition, it is also important from the necessity to prevent bleeding of wax due to the injection pressure. However, by using the technology of PCT/JP2015/073015 and/or PCT/JP2015/078074 by the present applicant, it has become possible to automatically set an appropriate clamp force and hold a sealing force of the matching surface 3c, regardless of the size of the rubber mold 3.
Changing the kind of wax is not easy (is cumbersome), and a fairly long time is needed to stabilize the wax temperature and/or to remove air bubbles from the wax. For these reasons, it is common to first set the kind of wax and the injection pressure and then to operate the wax mold injection molding apparatus 10. Necessity to change the kind of wax and the injection pressure during operation of the wax mold injection molding apparatus 10 is not high. Therefore, the necessity of automatically setting "E. Kind of wax" and "F. Injection pressure" is not high.
"D. Rubber mold 3 pressing force" can be fixed to a constant pressing force as described above. Necessity to automatically set "Pressing time" is not high, because there is no problem even if the apparatus is operated with an appropriate value common to various types of rubber molds 3 input in advance.
Necessity to automatically set "J. Clamp holding time" is not high. The reason is that, as described above, in the sequential wax mold manufacturing method, the rubber mold 3 will be held by a rubber band or the like after being taken out from the wax mold injection molding apparatus 10, and it is not required to hold a rubber mold 3 by the clamp unit 20 until the wax solidifies. However, it may be advantageous to determine the clamp holding time automatically or semi-automatically depending on whether to use the sequential wax mold manufacturing method, or on the shape of the rubber mold 3 or the volume of the cavity and the likes. A method of determining the clamp holding time automatically or semi-automatically will be descried later in this specification.
From the above, in the series of operations of the wax mold injection molding apparatus 10, "G. Vacuuming time" and "H. Injection time" are highly necessary to automatically set for each rubber mold 3. As described above, the size, cavity shape and cavity volume differ in each rubber mold 3, and it is necessary to individually set these parameters for each rubber mold 3. It is desirable to set these parameters for each rubber mold 3 even when manufacturing wax molds using a plurality of rubber mold 3 of the same shape in turn (or in orderly manner).

In the past, a sufficiently long vacuuming time and a sufficiently long injection time ("longest vacuuming time and injection time") for all rubber molds 3 settable to the wax mold injection molding apparatus 10 was determined from experience and the like, and the wax mold injection molding apparatus 10 was operated with such "longest vacuuming time and injection time" regardless of which rubber molds 3 were used. Production was possible in such a method because the product quality will not be degraded even if the vacuuming time and injection time were too long. However, optimum vacuuming time and injection time are greatly different depending on the size of the rubber mold 3. Therefore, in the above operation method, cycle time becomes longer and productivity is significantly reduced as a matter of course.

In recent years, a method in which various parameters including optimum vacuuming time and injection time are collected by trial and error, for example by experimentally creating wax molds for each rubber mold 3, and parameters collected for each rubber mold 3 are input to the wax mold injection molding apparatus 10 each time of injection. Further, the Patent Literature 2 proposes a method, in which parameters collected with similar trial and error ways are recorded in IC chips and embedded in each rubber molds 3, and these parameters are read out when any of the rubber molds 3 is set in the wax mold injection molding apparatus 10.

However, in large plants, a vast number of rubber molds 3 (e.g., 50,000) are used, including those manufactured in the past. It takes much efforts and administrative burden to collect parameters by trial and error for each of the vast number of rubber molds 3, input them in the wax mold injection molding apparatus 10, or record them in IC chips.

Problem 2

Generally, regarding vacuuming of the rubber mold 3, it is considered the higher the vacuum is, the better. However, this is not necessarily so.

As described in "E. Wax melting temperature/contraction/viscosity", even if a wax mold is manufactured using a molten wax whose air bubbles are considered to have sufficiently been removed, a large number of air bubbles are often found by a careful observation with a magnifying glass. Small air bubbles may not cause a serious problem. This is because such air bubbles are removed by polishing the surface of products (noble metals, accessories, and the likes) in the seventh finishing process after casting the product. However, if air bubbles remain in a tip end portion like a needle, a serious problem occurs. This is unrepairable, and the yield is significantly reduced. This much relates to a design or a way of providing a pouring gate.

The present inventor made the upper tank cover 35a of FIG. 2 transparent, and visually observed the process of vacuum degassing the molten wax to find air bubbles being generated from the molten wax endlessly. Further, a transparent wax was put in a test tube, was molten, and gradually the degree of vacuum was heightened. Then, it was observed, firstly supposedly air bubbles dissolved in the molten wax were generated in large quantities, then generation of air bubbles subsided once, however, each time a slight impact was applied to the test tube, air bubbles were generated in large quantities. Further, the wax injection experiments were repeated with changing the degree of vacuum. As a result, it is confirmed, by setting the degree of vacuum to an appropriate value, air bubbles on the wax mold surface were reduced.

From the above, the inventor concluded that this is a phenomenon related to a liquid vapor pressure. In other words, wax or wax additives include volatile components. When a wax is injected in a state where the cavity 4 of the rubber mold 3 is evacuated, the wax is momentarily exposed to a high vacuum, and air bubbles are generated by evaporation of the volatile component. It is considered that even if the injected wax is filled into the cavity 4 of the rubber mold 3 thereafter and pressurized upto the injection pressure, the evaporated component does not re-dissolve and remain inside or on the surface of the wax mold as small air bubbles.

The inventor guesses that small air bubbles have been considered to be natural or unavoidable in the art and no measure has been taken ever since. However, bubbles on the surface are definitely a flaw, even if they are small. The inventor is convinced that if air bubbles are reduced or made to zero, it greatly contribute to improve the product yield or to the technical progress of a lost wax precision casting method.

The present application discloses inventions made in view of the above problems. In particular, the present application includes inventions for achieving the following objects.

A first object of the present invention is to enable automatic setting of vacuuming (or vacuuming time), wax injection (wax injection time), and/or clamp holding time of a rubber mold 3 by an automatic measurement performed by an apparatus itself each time of operation.

A second object is to enable a wax mold injection molding apparatus to automatically determine operating conditions for each rubber mold 3, without the need to operate the wax mold injection molding apparatus by writing data collected in preliminary experiments to an IC chip, embedding it in the rubber mold 3, and reading out the data by a reading device, or by storing data collected for each rubber mold 3 directly in the wax mold injection molding apparatus and reading out the data for each of the rubber mold 3 from a memory for every wax injection.

A third object is to reduce the labor and management costs to determine data such as operating conditions by trial and error approach such as preliminary experiments, store the data in a wax mold injection molding apparatus, or write the data to an IC chip.

A fourth object is to provide a wax mold injection molding apparatus capable of adjusting the degree of vacuum in cavity 4, in particular, to reduce air bubbles remarkably by adjusting or maintaining the degree of vacuum in the vacuum chamber or cavity 4 to a lower vapor pressure than those of volatile components contained in wax or additives.

**Solution to Problem**

The present application discloses the following embodiments of the invention.

<Aspect 1>
A wax mold injection molding apparatus comprising:

a vacuum chamber;
a nozzle connected to the vacuum chamber; and
a pressure sensor for measuring a pressure in the vacuum chamber, wherein:
the wax mold injection molding apparatus is capable of vacuuming of a mold using the vacuum chamber and wax injection to the mold after the vacuuming, through the nozzle, wherein an operation control unit for controlling a time duration of performing the vacuuming and/or the wax injection based on a pressure in the vacuum chamber.

<Aspect 2>
A wax injection molding apparatus according to aspect 1, further comprising a volume calculation unit adapted to calculate a cavity volume of the mold based on the pressure in the vacuum chamber, wherein the operation control unit is adapted to control the vacuuming and/or the wax injection based on the cavity volume.
<Aspect 3>
A wax mold injection molding apparatus according to aspect 1 or 2, further comprising a vacuum pump that is connected to the vacuum chamber via a vacuum valve, wherein the operation control unit is adapted to control the vacuuming and/or the wax injection based on the pressure in the vacuum chamber when the vacuuming is performed in a state that the vacuum valve is closed.
<Aspect 4>
A wax mold injection molding apparatus according to any one of aspects 1 to 3, wherein the operation control unit is adapted to terminate the vacuuming when the pressure in the vacuum chamber decreases to a first threshold value.
<Aspect 5>
A wax mold injection molding apparatus according to aspect 4, wherein the operation control unit is adapted to terminate the vacuuming when a pressure in the vacuum chamber increases to a second threshold value after the start of the vacuuming and then decreases to the first threshold value.
<Aspect 6>
A wax mold injection molding apparatus according to any one of aspects 1 to 5, further comprising a vacuum chamber pressure control unit for controlling a pressure in the vacuum chamber.
<Aspect 7>
A wax mold injection molding apparatus according to any one of aspects 1 to 6, further comprising a clamp unit for clamping the mold, wherein the operation control unit is further adapted to control time duration that the clamp unit clamps the mold.
<Aspect 8>
A method of casting articles using a wax mold injection molding apparatus comprising: a vacuum chamber;
a nozzle connected to the vacuum chamber; and
a pressure sensor for measuring a pressure in the vacuum chamber, wherein:
the wax mold injection molding apparatus is capable of vacuuming of a mold using the vacuum chamber and wax injection to the mold after the vacuuming, through the nozzle, and wherein:
the method is characterized by controlling the vacuuming and/or the wax injection based on a pressure in the vacuum chamber.

Brief Description of the Drawings

FIG. 1 is an explanatory drawing of a method of manufacturing a rubber mold.

FIG. 2 is a conceptual drawing of a wax mold injection molding apparatus 10 used in a third step.

FIG. 3 shows a wax mold injection molding apparatus 10A of a first embodiment of the present invention.

FIG. 4 shows a vacuum chamber 50 of a wax mold injection molding apparatus 10A of one embodiment.

FIG. 5 shows changes in a pressure P (a measurement value of a pressure sensor 51) of a vacuum chamber 50 in an operation process of a wax mold injection molding apparatus 10A.

FIG. 6 shows an operation example of an operation control unit 60 in a control example 4.

FIG. 7 shows changes in a pressure P when sucking air of a cavity 4 of a rubber mold 3 in a second embodiment.

FIG. 8 shows a wax mold injection molding apparatus 10A using an injection nozzle 130 according to a third embodiment as compared with a case of using an ordinary injection nozzle 230.

**Mode for Carrying out the Invention**

Hereinafter, embodiments of the present invention will be described with reference to the drawings.

First embodiment

A wax mold injection molding apparatus 10A of this embodiment comprises a clamp unit 20, a wax injection unit 30, and an operation control unit 60. The clamp unit 20 and the wax injection unit 30, basically, have the same configuration as a clamp unit 20 and a wax injection unit 30 of a wax mold injection molding apparatus 10.

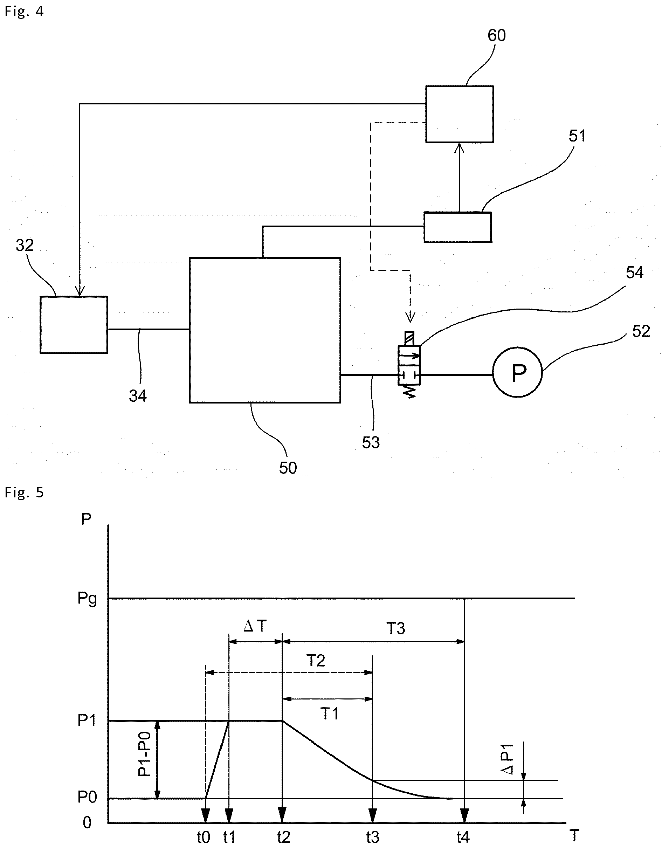

FIG. 4 shows a vacuum chamber 50 of the wax injection unit 30 of this embodiment.

As shown in the drawing, the vacuum chamber 50 is connected to a pressure sensor 51 and a vacuum pump 52. The pressure sensor measures a pressure (or air pressure) inside the vacuum chamber 50. The pressure sensor 51 can be any device, structure or configuration capable of measuring a pressure inside the vacuum chamber 50. The pressure sensor 51 can be, for example, Pirani gauge, McLeod gauge, and a liquid column type vacuum gauge.

The vacuum chamber 50 is connected to an injection nozzle 31 via an exhaust passage 34. The exhaust passage 34 can be opened and closed by an exhaust valve of a switching mechanism 32. By opening the exhaust valve of the switching mechanism 32 with pressing a rubber mold 3 to the injection nozzle 31, the vacuum chamber 50 is communicated with a cavity 4 of the rubber mold 3, and vacuuming of the rubber mold 3 becomes possible.

The vacuum chamber 50 and the vacuum pump 52 are connected through a vacuum passage 53. The vacuum passage 53 is provided with a vacuum valve 54. In the present embodiment, a description will be given on the assumption that the vacuum pump 52 is continuously operated. When the vacuum value 54 is opened, the pressure P in the vacuum chamber 50 is lowered to a capability limit of the vacuum pump 52 (see P0 in FIG. 5). When the vacuum valve 54 and the exhaust value of the switching mechanism 32 are closed, the pressure P in the vacuum chamber 50 is kept constant. (Of course, a pressure drop due to a vacuum leak occurs, but, for convenience of explanation, no vacuum leak is assumed.) When the pressure is increased for some reason, such as vacuuming, the pressure P may be decreased by opening the vacuum valve 54. Keeping of the pressure P in the vacuum chamber 50 is satisfactorily made by such ON/OFF control.

The operation control unit 60 controls the operation of the wax mold injection molding apparatus 10A based on the pressure P in the vacuum chamber 50 (e.g., an output of the pressure sensor 51). In a preferable embodiment, the operation control unit 60 controls the operation of the switching mechanism 32 of the wax injection unit 30 (e.g., switching between the states 1 to 3). In a more preferable embodiment, the operation control unit 60 also controls the operation of the clamp unit 20. The operation control unit 60 may have a computer for program-controlled operation of the wax mold injection molding apparatus 10A. The computer may have a CPU and a storage device. Further, for controlling the operation of the wax mold injection molding apparatus 10A, the operation control unit 60 may also have an electrical circuit and/or a mechanical drive mechanism required. The operation control unit 60 may be configured only with an electric circuit and/or a mechanical drive mechanism, without using a computer.

An example of the operation of the wax mold injection molding apparatus 10A will be explained.

1. Embodiment for controlling vacuuming (Embodiment 1-1)

FIG. 5 shows the pressure P in the vacuum chamber 50 in the operation process of the wax mold injection molding apparatus 10A (measured value of the pressure sensor 51).

First, the operation control unit 60 sets the switching mechanism 32 to state 1, and opens the vacuum valve 54. Thus, the vacuum chamber 50 comes close to a vacuum capability limit of the vacuum pump 52 (see the pressure P0 in FIG. 5).

In the state 1, set the rubber mold 3 in the camp unit 20, and press the rubber mold 3 to the injection nozzle 31. This operation may be performed by a person. Alternatively, by controlling the clamp unit 20 by the operation control unit 60, all or part of this operation may be automated. When the operation is performed by a person, by using a sensor or the like, the operation control unit 60 may determine that the rubber mold 3 has been pressed.

In the state that the rubber mold 3 is being pressed, the operation control unit 60 switches the switching mechanism 32 from the state 1 to state 2 (see the Time t0 in FIG. 5). Thus, the cavity 4 of the rubber mold 3 communicates with the the vacuum chamber 50, the pressure decreases in the cavity 4, and the pressure increases in the vacuum chamber 50 (see the time t1 and pressure P1 in FIG. 5).

Thereafter (for example, at the time t3 in FIG. 5), the operation control unit 60 terminates the vacuuming. Preferably, the operation control unit 60 switches the switching mechanism 32 from the state 2 to state 3. More preferably, the operation control unit 60 shuts off the injection nozzle 31 and the vacuum chamber 50, and after a while, communicates the injection nozzle 31 and the wax chamber 40. As a result, a wax is injected into the cavity 4 of the rubber mold 3.

The operation control unit 60 controls the above vacuuming based on the pressure P in the vacuum chamber 50. Some examples of the vacuuming based on the pressure P in the vacuum chamber will be explained below.

Control example 1 (Control of vacuuming using a calculated value of cavity volume)

If the switching mechanism is switched from the state 1 to state 2 at the time t0, then the pressure P becomes a stable pressure P1 at the time t1. Although the pressure P is continuously measured at every moment, the value (pressure value) at the time the pressure P being stabilized over a predetermined time $\Delta T$ is adopted as a stable pressure P1. To heighten the operating efficiency of the wax mold injection molding apparatus 10A, the time $\Delta T$ is preferable to be as short as possible in the range of 0.1-1.0 sec. Using the stable pressure P1, the operation control unit 60 calculates the cavity volume (volume of the cavity 4) Vg, and determines the vacuuming time T1 from the cavity volume Vg.

The operation control unit 60 opens the vacuum value 54 at the time t2 when a certain time $\Delta T$ has passed from the time t1, and terminates the vacuuming at the time t3 when the vacuuming time T1 has passed from the time t2 (for example, switches the switching mechanism 32 from the state 2 to state 3).

In the control example 1, it is recommended to store the data for calculating the vacuuming time T1 from the cavity volume Vg in the storage of the operation control unit 60. The data may be mathematical formulae or table format data defining the relationship between the cavity volume Vg and the vacuuming time T1. Such data can be obtained by determining appropriate vacuuming times with respect to various cavity volumes Vg through preliminary experiments of vacuuming several rubber molds 3 prepared in advance with known cavity volumes Vg. The appropriate vacuuming time can be a sufficiently short time which enables production of a high quality wax mold, for example. The above data can also be obtained by measuring the time until the pressure P decreases to a certain threshold value (e.g., $\Delta T$ in FIG. 5).

Here, an example of a method of calculating the cavity volume Vg from the stable pressure P1 will be explained. First, assuming that air in the vacuum chamber 50 is completely zero, that is, completely vacuum, the pressure in the vacuum chamber 50 is calculated from a state change equation of sucked air. Assume a volume of the vacuum chamber is V0, an initial pressure of the vacuum chamber 50 is P0, an absolute temperature in the vacuum chamber is T0, a gas constant of air is R, a volume of the cavity 4 is Vg, an initial pressure of the cavity 4 is Pg, an initial air weight is Gg, and an absolute temperature of air in the cavity 4 is Tg.

Since the state equation of the air in the cavity 4 of the rubber mold 3 is PgVg = GgRTg, the equation (1) is established.

$$Gg = PgVg/RTg \qquad (1)$$

As the air expands in the vacuum chamber 50 due to the vacuuming, Vg changes to V0 (Vg<V0). As the temperature in the vacuum chamber 50 is controlled to T0, Tg changes to T0 (Tg<T0). As the sucked air expands to have a stable pressure P1 due to two causes, vacuum and temperature increase. Therefore, P1V0= GgRT0. By substituting Gg=PgVg/RTg,

$$P1V0=(RT0\times PgVg)/RTg=(T0/Tg)PgVg$$

Therefore, the cavity volume Vg can be obtained by the following equation (2).

$$Vg=(P1/Pg)(Tg/T0)V0 \qquad (2)$$

Assuming the air temperature in the cavity 4 to be 30°C, Tg=273+30=303K. Assuming the temperature control setting to be 70°C, T0=273+70=343K. Therefore, Tg/T0=1.132 is established. Pg is an atmospheric pressure. Assuming Pg=101.3 [kPa], the stable pressure P1=0.2 [kPa] and the vacuum chamber volume V0=1000 [cc], the cavity volume is Vg=(0.2/101.3)×1.132×1000=2.24 [cc]. Such a thing like a ring usually has a volume of about 0.5-1.5 cc. Some other thick thing may have a volume of about 6 cc. Such a thing like a bracelet may have a volume about 10 times larger than that. As larger things, there are various kinds of statues or the like for example.

In the above, an ultimate vacuum of the vacuum pump was assumed be absolute zero pressure, but a common ultimate vacuum is not zero. Assuming the ultimate vacuum to be P0, the above is re-calculated as follows:
As the state equation inside the vacuum chamber 50 before the vacuuming is P0V0=G0RT0,

$$G0=P0V0/RT0 \qquad (3)$$

From the equations (1) and (3), the equation (4) is obtained.

$$G0+Gg=P0V0/RT0+PgVg/RTg \qquad (4)$$

As the air in the vacuum chamber 50 and the cavity 4 are mixed, and the pressure in the vacuum chamber 50 becomes the stable pressure P1. Therefore,

$$P1V0=(G0+Gg)×RT0=(P0V0/RT0+PgVg/RTg)×RT0 \qquad (5)$$

This equation is arranged as follows:

$$Vg = [(P1-P0) / Pg]×(T1 / T0) V0 \qquad (6)$$

Comparing the equations (2) and (6), it can be seen that the cavity volume Vg is obtained by substituting a pressure change amount (P1-P0) into Pg of the equation (2).

In FIG. 5, T2 is the time while the vacuum valve of the switching mechanism 32 is opening, and T3 is the time until the pressure P in the vacuum chamber 50 returns to approximately P0 after the vacuum value 54 is opened.

Control example 2 (Control of vacuuming using a calculated value of cavity volume)

The cavity volume Vg may be calculated by another method. For example, a pressure gradient of the vacuum chamber 50, when the switching mechanism 32 is switched from the state 1 to state 2 (e.g., a pressure gradient from the time t0 to t1), is proportional to (at least related to) the cavity volume Vg. Therefore, the cavity volume Vg can be calculated based on the pressure gradient.

Control example 3 (Control of vacuuming without calculating a cavity volume)

It is also possible not to calculate the cavity volume Vg. For example, it is possible that data for calculating the vacuuming time T1 from the pressure P in the vacuum chamber 50 (e.g., the stable pressure P1 or the pressure gradient after the time t0) are obtained in advance in preliminary experiments and the like and stored in the storage of the operation control unit 60, and this data is used to calculate the vacuuming time T1 from the pressure P in the vacuum chamber 50.

Control example 4 (Control of vacuuming using a pressure threshold value

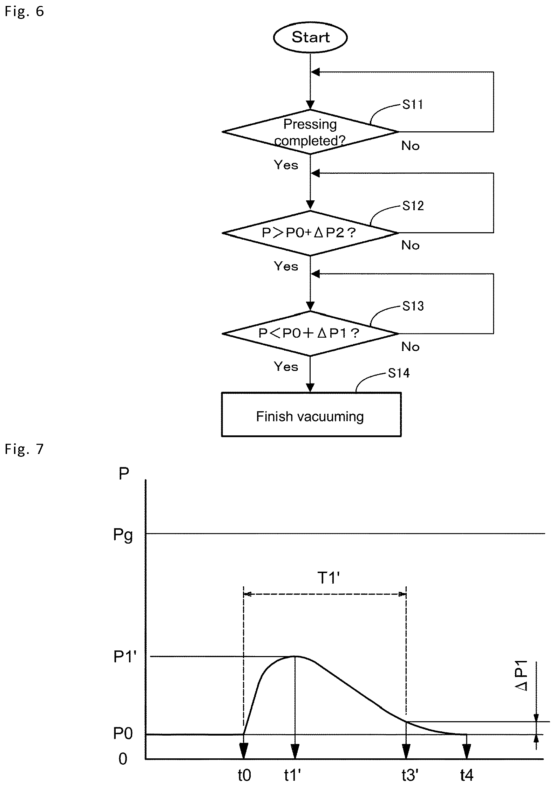

In the control example 4, the timing to terminate the vacuuming (e.g., timing to switch the switching mechanism 32 from the state 2 to state 3) is determined directly from the pressure P in the vacuum chamber 50. FIG. 6 shows an operation example of the operation control unit 60 in the control example 4. The storage of the operation control unit 60 stores two threshold values, a first threshold value $\Delta$P1 and a second threshold value $\Delta$P2 (Pg>$\Delta$P2≥$\Delta$P1).

In step S11 of FIG. 6, the operation control unit 60 determines whether the pressing of the rubber mold 3 is completed. If the determination in step S11 is affirmative (Yes), the operation control unit 60 goes to step S12, and determines whether the pressure P in the vacuum chamber 50 exceeds P0+$\Delta$P2. If the determination in step S12 is affirmative (Yes), the operation control unit 60 goes to step S13, and determines whether the pressure P in the vacuum chamber 50 decreases to less than P0+$\Delta$P1. If the determination in step S13 is affirmative (Yes), the operation control unit 60 terminates the vacuuming (for example, switching the switching mechanism 32 from the state 2 to state 3).

2. Embodiment for controlling wax injection (Embodiment 1-2)

In the embodiment 1-2, the operation control unit 60 controls wax injection based on the pressure P in the vacuum chamber 50. In a preferable embodiment, the operation control unit 60 controls the time (referred to "wax injection time Ti") from the start of wax injection (for example, the time to switch the switching mechanism 32 from the state 2 to state 3) to the time to terminate the wax injection (for example, the time to switch the switching mechanism 32 from the state 3 to state 1). In a particularly preferable embodiment, the operation control unit 60 calculates the cavity volume Vg based on the pressure P in the vacuum chamber 50, and determines the wax injection time Ti based on the cavity volume Vg. The operation control unit 60 can switch the switching mechanism 32 from the state 3 to state 1 after the time Ti has passed from the time to switch from the state 2 to state 3.

It has already been described in connection with the embodiments 1-1 that the cavity volume Vg can be calculated based on the pressure P in the vacuum chamber 50. Here, determining the wax injection time Ti from the cavity volume Vg will be described.

Assuming the time until wax fills in the cavity 4 of the rubber mold 3 is Tf, the time to increase the pressure to transmit the same pressure as the injection pressure to every corner of the cavity 4 is Tp, and the time until the wax in the sprue runner solidifies is Ts, the wax injection time can be expressed as Ti=Tf+Tp+Ts.

If the wax has already been filled in the cavity 4, Tp is very short. Further, as described in "I. Rubber mold 3 pressing time", Ts can be fixed as a constant time. Although, as Ts depends on room temperatures, it is desirable to be optionally set by a customer, it is considered unnecessary to change the numeric value for each rubber mold 3.

Tf is determined by the wax injection speed and the cavity volume Vg. The injection speed is determined by a fluid resistance caused by the injection pressure, the structures of the injection valve and nozzle, molten wax viscosity and the likes. A melting point of ordinary wax is about 70 °C and the wax chamber 40 temperature is set to a temperature little higher than that. Therefore, the molten wax viscosity is almost constant within a certain range. So, the injection speed specific to the apparatus can be obtained as data, whose main parameter is an injection pressure, by experiments.

The injection speed is measured as follows, for example. Fix the injection time Tf by the manual operation of the apparatus, measure the injected wax weight G by changing the injection pressure, and divide the measured value by Tf, and the injection speed can be obtained as W=G/Tf [g/sec]. Since the wax specific gravity is almost 1.0, the injection speed can also be written as W=G/Tf [cc/sec]. Therefore, it is possible to store the injection speeds corresponding to the injection pressures obtained by the experiments as data specific to that apparatus.

Assuming the injection pressure is 100 [kPa] in gauge pressure indication and the pressure in the vacuum chamber 50 is -100 [kPa] (complete vacuum), for example, the wax is injected while the pressure in the cavity 4 is made -100 [kPa] by the vacuuming. So, the pressure difference is 200 [kPa]. Therefore, the injection data for the injection pressure of 200 [kPa] may be used. When this data is written $W_{200}$, Tf can be calculated by dividing the volume of the cavity 4 with it as $Va/W_{200}$=Tf [sec].

Therefore, the injection time Ti can be calculated by the following equation (7) with using a constant value of k1=(Tp+Ts).

$$Ti = V1 / W_{200} + k1 \qquad (7)$$

The fluid resistance due to the fluid resistance of the sprue runner and the complexity of design acts individually for each rubber mold 3. Thus, if an appropriate safety factor k2 (a constant) is determined and the injection time Ti is determined by the equation below (8), it is possible to make a high-quality wax mold irrespective of the cavity shape, a rubber mold temperature, the type or temperature setting of the wax, or even the injection pressure.

$$Ti = V1 / W_{200} + k1 + k2 \qquad (8)$$

The pressure P in the vacuum chamber 50 (e.g., the stable pressure P1) correlates with the cavity volume Vg, and the cavity volume Vg correlates with the wax injection time Ti. Therefore, it is also possible to omit the calculation of the cavity volume Vg and determine the wax injection time Ti directly from the pressure P (e.g., the stable pressure P1) in the vacuum chamber 50.

Second embodiment

It is possible to omit the vacuum valve 54 in the wax mold injection molding apparatus 10A. Alternatively, it is possible to use the wax mold injection molding apparatus 10A with keeping the vacuum valve 54 left opened (without open/close control). Either of such configurations is referred to as a second embodiment.

1. Embodiment for controlling vacuuming (Embodiment 2-1)

FIG. 7 shows a change in the pressure P when air of the cavity 4 of the rubber mold 3 is sucked in the second embodiment. When the vacuuming is started at the time t0, the pressure momentarily passes through the upper dead point P1' at the time t1', then the pressure begins to decrease toward P0, and reaches P0 again at the time t4'.

P1' and t1' are determined by a suction capacity of the vacuum pump 52, a resistance of connection piping between the vacuum chamber 50 and the vacuum pump 52, a piping resistance of the injection nozzle 31 and the vacuuming passage in the switching mechanism 32, a temperature of the rubber mold 3, a temperature of the vacuum chamber 50, and the likes.

Therefore, it is possible to obtain data indicating the relationship between the P1' and the appropriate vacuuming time T1', by performing a preliminary vacuuming experiments with using several rubber molds 3 having known cavity volumes Vg, and determining the appropriate vacuuming time T1 for various cavity volume Vg in advance. It is possible to calculate the cavity volume Vg by storing the relationship data in the storage device, measuring the P1' at the time of vacuuming a rubber mold 3 having an unknown cavity volume Vg, and collating the measured value with the above data.

Therefore, in the embodiment 2-1, the operation control unit 60 can control the operation of the switching mechanism 32 as in the first embodiment by using the calculated cavity volume Vg. Like the control examples 2 and 3 in the first embodiment, the cavity volume Vg can also be calculated by another method, and the vacuuming time T1' can also be calculated from the pressure P in the vacuum chamber 50. The timing to terminate the vacuuming may be determined directly from the pressure P in the vacuum chamber 50 in the same way as in the control example 4 of the first embodiment.

2. Embodiment for controlling wax injection (Embodiment 2-2)

In the embodiment 1-2, it is described that the wax injection time Ti can be determined from the cavity volume Vg. In the embodiment 2-1, it is described the cavity volume Vg can be calculated based on the pressure P in the vacuum chamber 50. Therefore, it is possible, in the second embodiment as well, to calculate the cavity volume Vg based on the pressure P (e.g., the pressure P1' or the pressure gradient after the time t0) in the vacuum chamber 50, and control the wax injection by the wax injection time Ti determined based on the cavity volume Vg. Like the embodiment 1-2, the wax injection time Ti may be determined directly from the pressure P in the vacuum chamber 50 with omitting the calculation of the cavity volume Vg.

In the wax mold injection molding apparatus 10A of the embodiments 1-1 or 2-1, automatic vacuuming control is possible. This enables efficient vacuuming, reduces the operation cycle time of the wax mold injection molding apparatus 10A, and/or improves the wax mold quality.

Further, in the embodiments 1-1 and 2-1, as the control of the vacuuming time T1 or the control of terminating vacuuming when the pressure P in the vacuum chamber 50 drops to P0+ΔP1 is performed, it is possible to control the degree of vacuum in the cavity 4 at the end of vacuuming.

For example, by setting the degree of vacuum in the cavity 4 at the end of vacuuming to a predetermined target value, it is possible to reduce or eliminate air bubbles in a wax mold. The predetermined target value is preferably lower vacuum than the capability limit of the vacuum pump 52. The predetermined target value (upper limit) is preferably 5 kPa or lower, and more preferably, 3 kPa or lower. The predetermined target value (lower limit) is preferably 0.01 kPa or higher, more preferably 0.1 kPa or higher, and particularly preferably, 0.5 kPa or higher.

However, in the currently used wax mold injection molding apparatuses 10A, the vacuum chamber 50 is usually maintained at a pressure close to a capability limit P0 of the vacuum pump 52 (which is considerably high vacuum). Thus, in a rubber mold 3 having a small cavity volume Vg, the degree of vacuum in the cavity 4 drops to a value lower than the predetermined target value within an instant time from the start of vacuuming, and it is difficult to control the degree of vacuum in the cavity 4. Therefore, it is preferable to further have a vacuum chamber pressure control unit, which controls the vacuum pump 52 to a certain degree of vacuum (e.g., a degree of vacuum with a pressure slightly lower than the predetermined target value). The vacuum chamber pressure control unit can be a unit to control opening/closing of the vacuum valve 54 based on the pressure P measured by the pressure sensor 51. The operation control unit 60 may serve as a vacuum chamber pressure control unit as well. The control of vacuuming by the method of the control example 4 facilitates setting of a predetermined target value, and is particularly advantageous.

If the predetermined target value is set to a lower vacuum than the capability limit of the vacuum pump 52, one may consider that residual air in the cavity 4 may become a problem. However, it is not always the case that a wax does not enter the cavity 4 when a wax is injected in a condition where air remains in the cavity. Actually, in some designs in current practice, a wax is injected without vacuuming. Though it depends on a clamp force, the reason why wax enters the cavity 4 is that air inside the cavity 4 is pushed out from the matching surface of the rubber mold 3 by the pressure of the injected wax. The air can be pushed out, but a wax does not leak as the wax viscosity is high.

It is true that a higher degree of vacuum of the cavity 4 contributes to make molding sharper, however, it also causes a problem of air bubbles, as described above. Therefore, by setting the degree of vacuum in the cavity 4 to an appropriate target value, it is possible to sharpen wax molds, and also decrease air bubbles. The inventor is convinced that this technology has a significant meaning to improvement of a product yield and a technical progress in a lost wax precision casting method.

In the wax mold injection molding apparatus 10A of the embodiments 1-2 or 2-2, automatic control of wax injection is possible. Until now, the injection time Ti has been determined by trial and error and tended to be set unnecessarily long for the sake of safety. In the embodiments 1-2 and 2-2, it is possible to efficiently inject a wax, to reduce the operation cycle time of the wax mold injection molding apparatus 10A, and/or to improve the wax mold quality. By calculating an appropriate value of the injection time Ti and further taking a safety factor into consideration in the calculation, a reliable and not-unnecessarily-long injection time Ti can be determined.

Third embodiment

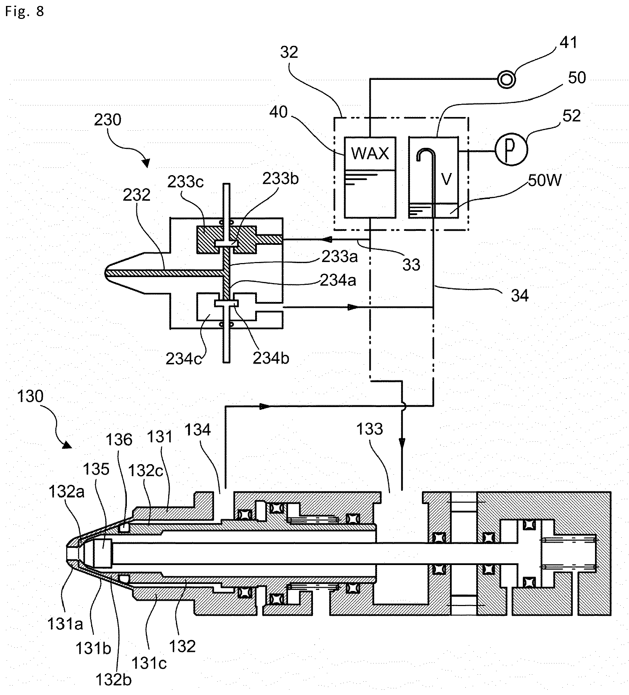

In the wax mold injection molding apparatus 10A of the first or second embodiment, it is desirable to adopt the injection nozzle 130 having the structure disclosed in Japanese Unexamined Patent Application Publication No. 2011-143581 or PCT/JP2015/079741 filed by the present applicant. This configuration is referred to as a third embodiment. For comparison, FIG. 8 shows an ordinary injection nozzle 230 (e.g., the injection nozzle of FIG. 6 in Japanese Unexamined Patent Application Publication No. 2011-143581) and an injection nozzle 130 of the third embodiment.

The injection nozzle 130 comprises an outer cylinder 131 having an inner wall, an inner cylinder 132 having an inner wall and an outer wall and being movable longitudinally, a wax passage 133 defined by the inner wall of the inner cylinder 132 and communicated with an opening at the front end of the inner cylinder 132, an exhaust passage 134 defined between the inner wall of the outer cylinder 131 and the outer wall of the inner cylinder 132 and communicated with an opening at the front end of the outer cylinder 131; and a valve body 135 movable longitudinally inside the inner cylinder 132. As the valve body 135 moves frontward/rearward, the wax passage 133 closes/opens. As the inner cylinder 132 moves frontward/rearward relative to the outer cylinder 131, the exhaust passage 134 closes/opens.

In the injection nozzle 230, in every wax injection cycle, the wax in a common passage 232 and an exhaust passage 234a accumulates in the vacuum chamber 50 as a wax drain 50W. In the injection nozzle 230, as the common passage 232 + exhaust passage 234a cannot be shortened due to a structural reason, the amount of wax drain each time of the cycle is very large. Contrarily, in the injection nozzle 130, only a slight amount of wax in the opening at the front end of the outer cylinder 131 becomes a wax drain 50W, and the amount of the wax drain in each time of the cycle is very small.

If the amount of wax drain is large in each time, the vacuum volume changes fast in the vacuum chamber 50. If the vacuum volume changes in the vacuum chamber 50, the manner of the pressure change in the vacuum chamber 50 at the time of sucking air from the cavity 4 of the rubber mold 3 varies.

If the manner of pressure change in the vacuum chamber 50 varies, it is necessary to correct the control of the vacuuming and/or wax injection based on the pressure P in the vacuum chamber 50. Such correction is not impossible. For example, such can be realized by performing preliminary experiments with variously changing the vacuum volume of the vacuum chamber 50, and grasping in advance how to change the control of the vacuuming and/or wax injection when the vacuum volume of the vacuum chamber 50 changes. However, such correction is very complex and undesirable.

The amount of wax drain in each time is about 0.02 cc in the injection nozzle 130, and about 0.4 cc in the injection nozzle 230. Assuming that an injection cycle is performed 1,000 times a day, the wax drain 50W stored in the vacuum chamber is about 20 cc in the former, and 400 cc in the latter. Since the volume of the vacuum chamber 50 is about 1,000 cc, the injection nozzle 230 requires such as 20 times of correction a day, and this is greatly disadvantageous. With using the injection nozzle 130, it is possible to maintain sufficient measurement accuracy only by measuring the vacuum chamber volume once a day at the start of operation. Therefore, the practical advantage of the third embodiment is great.

In the above description, the injection nozzle 130 disclosed in PCT/JP2015/079741 is shown as an example. The same effect can be obtained by the injection nozzle disclosed in Japanese Unexamined Patent Application Publication No. 2011-143581.

Fourth embodiment

In the wax mold injection molding apparatus 10A according to the fourth embodiment, the clamp holding time (see "J. Clamp holding time") is controlled based on the pressure P in the vacuum chamber 50.

As described in "J. Clamp holding time", it is preferable not to release the clamping until the surface of a wax mold is solidified in the cavity 4. In a case where the clamp holding time is required to be set long due to a large volume of the cavity 4, or a case where the sequential wax mold manufacturing method is used, the rubber mold 3 is taken out from the clamp unit 20 and then fixed with a rubber band or the like to be cooled down. Further, the thickness of a sprue runner is almost the same regardless of the rubber mold 3 and is generally Φ3. Therefore, in the case the volume of the cavity 4 is small, when the wax in the sprue runner is solidified, the wax in the cavity 4 is also solidified. Therefore, in this case, it is less necessary to control the clamp holding time in accordance with the cavity volume Vg.

However, in the case other than the above cases (for example, when the volume of the cavity 4 is medium, or when the sequential wax mold manufacturing method is not used), there is an actual advantage in controlling the clamp holding time based on the pressure P in the vacuum chamber 50. In particular, it is possible to calculate the cavity volume Vg by the methods described in the embodiments 1-1 or 2-1, and control the clamp holding time in accordance with the cavity volume Vg (for example, set a longer clamp holding time as the cavity volume Vg becomes larger). As described in the control example 3, it is also possible to determine the clamp holding time directly from the pressure P in the vacuum chamber 50 without performing calculation of the cavity volume Vg. These will enable efficient holding of the clamping of the rubber mold 3 until at least the surface of the wax is solidified and/or reduction of the operation cycle time of the wax mold injection molding apparatus 10A.

An appropriate clamp holding time may largely varies depending on the shape of the cavity 4. For example, a thin mold solidifies fast even if the volume is the same. Therefore, in the fourth embodiment, it is desirable to provide a switch capable of releasing the clamping with the operator's decision.

The above embodiments can be combined at will. For example, a fifth embodiment in which either one of the embodiment 1-1 (e.g., any one of the control examples 1-4) or the embodiment 2-1 (e.g., any one of the control examples 1-4) is combined with the embodiment 1-1 or 1-2 is also conceivable. It is also possible to combine any of the embodiment 5 with the embodiment 3 or 4.

**Industrial Applicability**

The present invention is applicable to a wax mold injection molding apparatus used for lost wax casting for manufacturing small articles such as jewelry, accessories and the like, or industrial articles (products), and the likes, and a method of casing articles using the wax mold injection molding apparatus.

**Description of Reference Numerals**

| | |
|---|---|
| 1 | model |
| 2 | part |
| 2a | Sprue runner |
| 2b | Pouring gate |
| 3 | Rubber mold |
| 4 | Cavity |
| 4a | Pouring gate |
| 10, 10A | Wax mold injection molding apparatus |
| 20 | Clamp unit |
| 21 | Rubber mold mounting table |
| 22 | Clamp force generator |
| 23 | Clamp plate |
| 24 | Pressing mechanism |
| 25 | Adjustment bolt |
| 26 | Movable lock knob |
| 30 | Wax injection unit |
| 31 | Injection nozzle |
| 32 | Switching mechanism |
| 33 | Wax passage |
| 34 | Exhaust passage |
| 35 | Tank |
| 35a | Upper tank cover |
| 35b | Band heater |
| 40 | Wax chamber |
| 50 | Vacuum chamber |
| 50W | Wax drain |

| 51 | Pressure sensor |
|---|---|
| 52 | Vacuum pump |
| 53 | Vacuum passage |
| 54 | Vacuum valve |
| 60 | Operation control unit |
| 130 | Injection nozzle |
| 131 | Outer cylinder |
| 131a | Part with a small inside diameter |
| 131b | Part with a tapered inside (Inside tapered part) |
| 131c | Part with a large inside diameter |
| 132 | Inner cylinder |
| 132a | Part with a small outside diameter |
| 132b | Part with a tapered outside (Outside tapered part) |
| 133 | Wax passage |
| 134 | Exhaust passage |
| 135 | Valve body |
| 136 | Sealing member disposed at or rear of the outside tapered part |
| 230 | Injection nozzle |
| 232 | Common passage |
| 233a | Wax passage |
| 233b | Wax valve |
| 233c | Wax reservoir |
| 234a | Exhaust passage |
| 234b | Exhaust valve |
| 235c | Vacuum reservoir |

**Claims**

1. A wax mold injection molding apparatus (10A) comprising:

    a vacuum chamber (50);
    a nozzle (31) connected to the vacuum chamber (50); and
    a pressure sensor (51) for measuring a pressure in the vacuum chamber (50), wherein:

       the wax mold injection molding apparatus (10A) is adapted for vacuuming of a mold (3) using the vacuum chamber (50) and wax injection to the mold (3) after the vacuuming, through the nozzle (31), and **characterized by** further comprising an operation control unit (60) adapted to control a time duration of performing the vacuuming and/or the wax injection based on a pressure in the vacuum chamber (50).

2. A wax injection molding apparatus (10A) according to claim 1, further comprising a volume calculation unit adapted to calculate a cavity volume of the mold (3) based on the pressure in the vacuum chamber (50), wherein the operation control unit (60) is adapted to control the vacuuming and/or the wax injection based on the cavity volume.

3. A wax mold injection molding apparatus (10A) according to claim 1 or 2, further comprising a vacuum pump (52) that is connected to the vacuum chamber (50) via a vacuum valve (54), wherein the operation control unit (60) is adapted to control the vacuuming and/or the wax injection based on the pressure in the vacuum chamber (50) when the vacuuming is performed in a state that the vacuum valve (54) is closed.

4. A wax mold injection molding apparatus (10A) according to any one of claims 1 to 3, wherein the operation control unit (60) is adapted to terminate the vacuuming when the pressure in the vacuum chamber (50) decreases to a first threshold value.

5. A wax mold injection molding apparatus (10A) according to claim 4, wherein the operation control unit (60) is adapted to terminate the vacuuming when a pressure in the vacuum chamber (50) increases to a second threshold value after the start of the vacuuming and then decreases to the first threshold value.

6. A wax mold injection molding apparatus (10A) according to any one of claims 1 to 5, further comprising a vacuum chamber pressure control unit for controlling a pressure in the vacuum chamber (50).

7. A wax mold injection molding apparatus (10A) according to any one of claims 1 to 6, further comprising a clamp unit (20) for clamping the mold (3), wherein the operation control unit (60) is further adapted to control time duration that the clamp unit (20) clamps the mold.

8. A method of casting articles using a wax mold injection molding apparatus (10A) comprising:

a vacuum chamber (50);
a nozzle (31) connected to the vacuum chamber (50); and
a pressure sensor (51) for measuring a pressure in the vacuum chamber (50), wherein:
the wax mold injection molding apparatus (10A) is adapted for vacuuming of a mold (3) using the vacuum chamber (50) and wax injection to the mold (3) after the vacuuming, through the nozzle (31) and wherein:
the method is **characterized by** controlling of the time duration of performing the vacuuming and/or the wax injection based on a pressure in the vacuum chamber (50).

**Patentansprüche**

1. Wachsform-Spritzgussmaschine (10A) umfassend:

eine Vakuumkammer (50);
eine Düse (31), die mit der Vakuumkammer (50) verbunden ist; und
einen Drucksensor (51) zum Messen eines Drucks in der Vakuumkammer (50), wobei:

die Wachsform-Spritzgussmaschine (10A) adaptiert ist, ein Gießwerkzeug (3) mithilfe der Vakuumkammer (50) auszusaugen und nach dem Aussaugen durch die Düse (31) Wachs in das Gießwerkzeug (3) einzuspritzen, und
**dadurch gekennzeichnet, dass** sie weiterhin eine Betriebssteuereinheit (60) umfasst, die zum Steuern einer Zeitdauer für das Aussaugen und/oder die Wachseinspritzung basierend auf einem Druck in der Vakuumkammer (50) adaptiert ist.

2. Wachsspritzgussmaschine (10A) nach Anspruch 1, weiterhin umfassend eine Volumenberechnungseinheit, die zum Berechnen eines Hohlvolumens des Gießwerkzeugs (3) basierend auf dem Druck in der Vakuumkammer (50) adaptiert ist, wobei die Betriebssteuereinheit (60) zum Steuern des Aussaugens und/oder der Wachseinspritzung basierend auf dem Hohlvolumen adaptiert ist.

3. Wachsform-Spritzgussmaschine (10A) nach Anspruch 1 oder 2, weiterhin umfassend eine Vakuumpumpe (52), die mit der Vakuumkammer (50) über ein Vakuumventil (54) verbunden ist, wobei die Betriebssteuereinheit (60) adaptiert ist, das Aussaugen und/oder die Wachseinspritzung basierend auf dem Druck in der Vakuumkammer (50) zu steuern, wenn das Aussaugen in einem Zustand ausgeführt wird, in dem das Vakuumventil (54) geschlossen ist.

4. Wachsform-Spritzgussmaschine (10A) nach einem der Ansprüche 1 bis 3, wobei die Betriebssteuereinheit (60) adaptiert ist, das Aussaugen zu beenden, wenn der Druck in der Vakuumkammer (50) auf einen ersten Schwellenwert absinkt.

5. Wachsform-Spritzgussmaschine (10A) nach Anspruch 4, wobei die Betriebssteuereinheit (60) adaptiert ist, das Aussaugen zu beenden, wenn ein Druck in der Vakuumkammer (50) nach dem Start des Aussaugens auf einen zweiten Schwellenwert ansteigt und dann auf den ersten Schwellenwert absinkt.

6. Wachsform-Spritzgussmaschine (10A) nach einem der Ansprüche 1 bis 5, weiterhin umfassend eine Vakuumkammer-Drucksteuereinheit zum Steuern eines Drucks in der Vakuumkammer (50).

7. Wachsform-Spritzgussmaschine (10A) nach einem der Ansprüche 1 bis 6, weiterhin umfassend eine Schließeinheit (20) zum Schließen des Gießwerkzeugs (3), wobei die Betriebssteuereinheit (60) weiterhin adaptiert ist, die Zeitdauer zu steuern, für die die Schließeinheit (20) das Gießwerkzeug schließt.

8. Verfahren zum Gießen von Artikeln unter Verwendung einer Wachsform-Spritzgussmaschine (10A), die umfasst:

eine Vakuumkammer (50);

eine Düse (31), die mit der Vakuumkammer (50) verbunden ist; und

einen Drucksensor (51) zum Messen eines Drucks in der Vakuumkammer (50), wobei:

die Wachsform-Spritzgussmaschine (10A) adaptiert ist, ein Gießwerkzeug (3) mithilfe der Vakuumkammer (50) auszusaugen und nach dem Aussaugen durch die Düse (31) Wachs in das Gießwerkzeug (3) einzuspritzen, und wobei:

das Verfahren **dadurch gekennzeichnet ist, dass** die Zeitdauer für das Durchführen des Aussaugens und/oder der Wachseinspritzung basierend auf einem Druck in der Vakuumkammer (50) gesteuert wird.

## Revendications

1. Appareil de moulage par injection de moule de cire (10A) comprenant :

   une chambre à vide (50) ;
   une buse (31) reliée à la chambre à vide (50) ; et
   un capteur de pression (51) pour mesurer une pression dans la chambre à vide (50), dans lequel :

   l'appareil de moulage par injection de moule de cire (10A) est adapté pour la mise sous vide d'un moule (3) à l'aide de la chambre à vide (50) et l'injection de cire dans le moule (3) après la mise sous vide, par la buse (31), et

   **caractérisé en ce qu'**il comprend en outre une unité de commande d'opération (60) adaptée pour commander une durée de temps de réalisation de la mise sous vide et/ou de l'injection de cire sur la base d'une pression dans la chambre à vide (50).

2. Appareil de moulage par injection de cire (10A) selon la revendication 1, comprenant en outre une unité de calcul de volume adaptée pour calculer un volume de cavité du moule (3) sur la base de la pression dans la chambre à vide (50), dans lequel l'unité de commande d'opération (60) est adaptée pour commander la mise sous vide et/ou l'injection de cire sur la base du volume de cavité.

3. Appareil de moulage par injection de moule de cire (10A) selon la revendication 1 ou 2, comprenant en outre une pompe à vide (52) qui est reliée à la chambre à vide (50) par l'intermédiaire d'une soupape à vide (54), dans lequel l'unité de commande d'opération (60) est adaptée pour commander la mise sous vide et/ou l'injection de cire sur la base de la pression dans la chambre à vide (50) lorsque la mise sous vide est effectuée dans un état tel que la soupape à vide (54) est fermée.

4. Appareil de moulage par injection de moule de cire (10A) selon l'une quelconque des revendications 1 à 3, dans lequel l'unité de commande d'opération (60) est adaptée pour mettre fin à la mise sous vide lorsque la pression dans la chambre à vide (50) diminue jusqu'à une première valeur seuil.

5. Appareil de moulage par injection de moule de cire (10A) selon la revendication 4, dans lequel l'unité de commande d'opération (60) est adaptée pour mettre fin à la mise sous vide lorsqu'une pression dans la chambre à vide (50) augmente jusqu'à une deuxième valeur seuil après le début de la mise sous vide, puis diminue jusqu'à la première valeur seuil.

6. Appareil de moulage par injection de moule de cire (10A) selon l'une quelconque des revendications 1 à 5, comprenant en outre une unité de commande de pression de chambre à vide pour commander une pression dans la chambre à vide (50).

7. Appareil de moulage par injection de moule de cire (10A) selon l'une quelconque des revendications 1 à 6, comprenant en outre une unité de serrage (20) pour serrer le moule (3), dans lequel l'unité de commande d'opération (60) est en outre adaptée pour commander la durée de temps pendant laquelle l'unité de serrage (20) serre le moule.

8. Procédé de moulage par coulée d'articles à l'aide d'un appareil de moulage par injection de moule de cire (10A) comprenant :

   une chambre à vide (50) ;
   une buse (31) reliée à la chambre à vide (50) ; et

un capteur de pression (51) pour mesurer une pression dans la chambre à vide (50), dans lequel :

l'appareil de moulage par injection de moule de cire (10A) est adapté pour la mise sous vide d'un moule (3) à l'aide de la chambre à vide (50) et l'injection de cire dans le moule (3) après la mise sous vide, par la buse (31) et dans lequel :

le procédé est **caractérisé en ce qu'**il commande la durée de temps de réalisation de la mise sous vide et/ou de l'injection de cire sur la base d'une pression dans la chambre à vide (50).

Fig. 1

Fig. 2

<u>10</u>

Fig. 3

<u>10A</u>

Fig. 4

Fig. 5

Fig. 6

Start

S11 — Pressing completed? — No

Yes

S12 — P > P0 + ΔP2 ? — No

Yes

S13 — P < P0 + ΔP1 ? — No

Yes

S14 — Finish vacuuming

Fig. 7

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015070617 W
- JP 2015073015 W
- JP 2015078074 W
- JP 2015079741 W
- WO 2013038448 A
- JP 2002254137 A
- WO 2014076738 A1
- CN 203875279 U
- JP 2011143581 A